**Europäisches Patentamt**

**European Patent Office**

**Office européen des brevets**

(19)

(11) Veröffentlichungsnummer: **0 200 801**
**A1**

(12) # EUROPÄISCHE PATENTANMELDUNG

(21) Anmeldenummer: 85105642.4

(22) Anmeldetag: 08.05.85

(51) Int. Cl.⁴: **C 09 D 3/72,** C 09 D 3/49,
C 08 G 18/10, C 08 G 18/08,
C 08 G 18/72, C 08 K 13/02,
C 08 K 13/04, C 08 K 5/52,
B 05 D 7/16, C 08 J 7/04

(43) Veröffentlichungstag der Anmeldung: **12.11.86**
**Patentblatt 86/46**

(71) Anmelder: **BGB-Gesellschaft Reinmar John Rainer-Leo Meyer u. Olga Meyer geb. Klöpfer, Rheinstrasse 64, D-7580 Bühl/Baden (DE)**

(72) Erfinder: **Meyer, Rainer Leo, Sommerbergweg 28, D-7580 Bühl/Baden (DE)**
Erfinder: **John, Reinmar, Zur Friedrichshöhe 37, D-7590 Achern 2 (DE)**
Erfinder: **Nagel, Rolf, Schartenbergstrasse 42c, D-7570 Baden-Baden 23 (DE)**
Erfinder: **Müller, Günter, Rösselweg 6, D-7591 Obersasbach (DE)**

(74) Vertreter: **Vogeser, Werner, Dipl.-Ing. et al, Patentanwälte Hansmann & Vogeser Albert-Rosshaupter-Strasse 65, D-8000 München 70 (DE)**

(84) Benannte Vertragsstaaten: **AT BE CH DE FR GB IT LI LU NL SE**

(54) **Beschichtungsmasse für flexible Substrate, deren Verwendung, und Verfahren zur Erzeugung eines Schutzüberzuges.**

(57) Eine 1-Komponenten-Beschichtungsmasse aus

35 bis 60 Gew.-% Isocyanat-Präpolymer,
8 bis 15 Gew.-% Weichmacher,
0,3 bis 2 Gew.-% Anti-Absetzmittel,
2 bis 10 Gew.-% blättchenförmige Extender,
5 bis 25 Gew.-% farbgebende Pigmente,
1 bis 3 Gew.-% feuchtigkeitsbindendes Mittel, und
10 bis 20 Gew.-% aliphatische Ester

liefert auf einem flexiblen Substrat wie Kunstleder, Kunststoffolie, Papier, Dachpappe, PUR-Hart- und Weichschäumen, Metallfolien, Beton und dgl. einen gut haftenden, außerordentlich elastischen Anstrichfilm von hoher Deckkraft und Lichtbeständigkeit. Weiterhin ist gute Abriebbeständigkeit und Witterungsbeständigkeit auch gegenüber aggressiven Medien wie Meerwasser und Chemikalien gegeben.

EP 0 200 801 A1

Beschreibung:

Die Erfindung betrifft eine Beschichtungsmasse für ein
flexibles Substrat, die wegen ihres Gehaltes an Isocyanat-
Präpolymer bzw. Polyisocyanat chemisch härtend ist. Insbesondere
betrifft die Erfindung eine 1-Komponenten-Beschichtungsmasse
dieser Art, die im fertig abgemischten Zustand bei Feuchtigkeitsausschluß lagerbeständig ist, jedoch nach Aufbringen auf
dem vorgesehenen Substrat durch Feuchtigkeitszutritt aus der
umgebenden Atmosphäre aushärtet. Als flexibles Substrat kommen
beispielsweise Schichtstoffe in Betracht, die wegen ihrer geringen Schichtdicke biegsam oder faltbar sind; zu beispielhaften Schichtstoffen dieser Art gehören - ohne darauf beschränkt zu sein - Metallfolien, Kunststoffolien, Kunstleder,
Papier, Pappe, Dach- oder Teerpappe und dgl. Weiterhin kommen
als flexible Substrate Hart- und Weichschäume in Betracht, ferner
massive Teile wie Profile, Rohre und sonstige Flächen aus Metall, die einer thermischen Ausdehnung ausgesetzt sind, sowie
Betonflächen.

Weiterhin betrifft die Erfindung ein Verfahren zur Erzeugung
eines farbigen, hoch elastischen Schutzüberzuges auf einem
flexiblen Substrat der genannten Art. Schließlich betrifft
die Erfindung verschiedene Verwendungsmöglichkeiten dieser
feuchtigkeitshärtenden 1-Komponenten-Beschichtungsmasse.

Es sind bereits Beschichtungsmassen zur Erzeugung eines farbigen Anstriches auf einem flexiblen Substrat bekannt. Die
bekannten Beschichtungsmassen weisen verschiedene Nachteile
auf. Beispielsweise muß eine bekannte Beschichtungsmasse in
ca. 4 Schichten aufgebracht werden, um eine ausreichende Deckkraft zu gewährleisten. Diese hohen Schichtstärken sind erforderlich, weil das zugrundeliegende Bindemittel keine hohe Pigmentierung zuläßt, und deshalb erst in mehreren Schichten der gewünschte Farbton mit ausreichender Deckkraft erhalten wird. Bei zu starker Abbiegung oder Faltung des Substrates neigt der aus der bekannten Beschichtungsmasse erhaltene Anstrich zur Rißbildung und Ablösung vom Substrat, weil die Elastizität des ausgehärteten Anstriches unzureichend ist.

Bei feuchtigkeitshärtenden 1-Komponenten-Beschichtungsmassen mit Polyisocyanat als Bindemittel könnte die Elastizität der ausgehärteten Anstrichfolie durch eine Verringerung des Bindemittelgehaltes und/oder Erhöhung des Weichmachergehaltes versucht werden. Bei der praktischen Erprobung treten jedoch Schwierigkeiten hinsichtlich der Aushärtung auf, weil bei zu geringem Polyisocyanatgehalt die Aushärtung der Masse zum einen eine übermäßig lange Zeitspanne benötigen würde und zum andern überhaupt ungenügend sein könnte, so daß nach einer Aushärtedauer von 10 h und mehr immer noch eine klebrige Beschichtung vorliegt.

Davon ausgehend besteht die der vorliegenden Erfindung zugrundeliegende Aufgabe darin, die geschilderten und weitere Nachteile bekannter Beschichtungsmassen zu überwinden. Insbesondere besteht die Aufgabe der vorliegenden Erfindung darin, eine feuchtigkeitshärtende 1-Komponenten-Beschichtungsmasse bereitzustellen, die eine farbige, lichtbeständige und hochelastische Anstrichfolie liefert, welche auch auf flexiblen Substraten ausgezeichnet haftet. Bereits in einer Schichtdicke von lediglich 50 $\mu$m soll ein deckender Farbanstrich erhalten werden, der auch empfindliche Materialien wie PUR-Weichschäume vor einem Abbau durch Lichteinwirkung und/oder UV-Strahlung sicher zu schützen vermag. Weiterhin soll der Schutzanstrich verwitterungsbeständig sein und bei Bedarf das Substrat auch vor mechanischer Beschädigung schützen.

Die erfindungsgemäße Lösung dieser Aufgabe ist eine feuchtigkeitshärtende 1-Komponenten-Beschichtungsmasse für flexible Substrate, welche die in Anspruch 1 angegebene Zusammensetzung aufweist.

Die erfindungsgemäße Beschichtungsmasse liefert nach dem Aushärten farbige Anstriche die auch in vergleichsweise geringer Schichtdicke von lediglich 50 µm absolut deckend sind und eine hohe Lichtbeständigkeit aufweisen. Die ausgehärteten Anstrichfolien weisen eine außergewöhnlich hohe Elastizität, Dehnung und Haftung am Untergrund auf, so daß ein flexibles Substrat gefaltet oder gekniffen werden kann, ohne daß ein aus der erfindungsgemäßen Beschichtungsmasse gebildeter Überzug reißt, sich ablöst oder sonstwie beschädigt wird. Beispielsweise konnte eine Metallfolie entsprechend dem Dornbiegeversuch nach DIN 53 152 um einen Dorn mit einem Durchmesser von 1 mm gebogen werden, ohne daß an der auf der Metallfolie haftenden 50 µm dicken Anstrichfolie Rißbildung, Ablösen oder sonstige Beschädigung auftrat.

Die erfindungsgemäße Beschichtungsmasse liefert witterungsbeständige Schutzanstriche mit guter Beständigkeit gegen Meerwasser und Chemikalien. Die ausgehärteten Anstriche zeigen ausgezeichnete Licht- und Wetterbeständigkeit und schützen den Untergrund vor einem Abbau durch die Einwirkung von Licht- und/oder UV-Strahlung.

Die erfindungsgemäße Beschichtungsmasse ist auch in hohen Schichtstärken auftragbar und härtet problemlos aus. Beispielsweise kann zur Abdichtung und/oder Renovierung von mit Dachpappe eingedeckten Dächern die erfindungsgemäße Beschichtungsmasse in einem einzigen Arbeitsgang in einer Schichtstärke von 2 mm und mehr aufgetragen werden. Eine ca. 2 mm dicke Schicht ist unter Normalbedingungen ($20^{\circ}$C, 80 % relative Luftfeuchtigkeit) innerhalb von etwa 8 bis 10 h soweit ausgehärtet, daß bei Bedarf ein Folgeanstrich aufgebracht werden könnte; nach ca. 48 h ist die Beschichtung völlig durchgehärtet und kann begangen werden.

Die erfindungsgemäße Beschichtungsmasse kann in einem weiten
Temperaturbereich eingesetzt werden; beispielsweise ist Temperaturbeständigkeit im Bereich von-30$^{o}$C bis +150$^{o}$C gegeben.
Die Aushärtung erfolgt problemlos im Temperaturbereich von
-5$^{o}$C bis zu einer Dauertemperatur von 50$^{o}$C.

Der fertig ausgehärtete Überzug haftet dank seiner guten Haftfestigkeit und hoher Elastizität an den verschiedensten flexiblen Substraten, wie etwa Weich- und Hartschäumen, Kunstleder,
Kunststoffolien, Metallfolien, Papier, Pappe, Dachpappe, Aluminiumfolien, Stahlflächen, Beton und dgl.. Darüberhinaus weist
der ausgehärtete Schutzanstrich gute Abriebfestigkeit auf und
schützt, insbesondere in höheren Schichtdicken von 100 μm und
mehr, den Untergrund vor mechanischer Beschädigung. In dieser
Hinsicht kann die erfindungsgemäße Beschichtungsmasse beispielsweise zur Innenbeschichtung von Siloanlagen, von Salzstreuwagen und ähnlichen Stahlflächen verwendet werden, die
bestimmungsgemäß dem Aufprall und der Scheuereinwirkung von
Partikeln ausgesetzt sind.

Weil die erfindungsgemäße Beschichtungsmasse als 1-Komponenten-
System konfektioniert ist, kann sie praktisch unter Feuchtigkeitsausschluß unbegrenzt gelagert werden, und härtet dennoch
nach Aufbringung auf dem vorgesehenen Substrat allein durch
Zutritt von Luftfeuchtigkeit aus der umgebenden Atmosphäre
aus. Bei Bedarf kann auf einem ca. 80 μm dicken Anstrich aus
der erfindungsgemäßen Beschichtungsmasse nach etwa 2 bis 3 h
ein Folgeanstrich aus dem gleichen Material aufgebracht werden. Nach ca. 15 bis 20 h ist auch ein mehrschichtiger Schutzüberzug völlig ausgehärtet und kann der vorgesehenen Belastung
ausgesetzt werden.

Weiterhin ist Gegenstand der Erfindung ein Verfahren zur Erzeugung eines farbigen, hoch elastischen Schutzüberzuges auf
einem flexiblen Substrat, wobei man die erfindungsgemäße 1-Komponenten-Beschichtungsmasse auf dem schmutz-, staub-, öl-
und fettfreien Substrat aufbringt, und unter Feuchtigkeitszutritt aus der umgebenden Atmosphäre aushärten läßt.

Vorzugsweise wird bei einer einmaligen Applikation die erfindungsgemäße Beschichtungsmasse wenigstens in einer Schichtdicke von 50 µm aufgebracht. Hierbei wird ein farbiger Deckanstrich hoher Deckkraft und hoher Lichtbeständigkeit erhalten.

Bevorzugte Verwendungen der erfindungsgemäßen Beschichtungsmasse betreffen die Erzeugung eines farbigen, lichtbeständigen,
gut haftenden und hoch elastischen Anstriches auf einem flexiblen Substrat. Hierbei kann das Substrat aus den verschiedensten
Materialien bestehen, wie das oben ausgeführt ist. Wegen der
hohen Elastizität und ausgezeichneten Haftfestigkeit treten
dann am ausgehärteten Anstrichfilm auch bei scharfkantigem
Umbiegen oder Falten eines Substrates keinerlei Rißbildung,
Ablösen oder sonstige Beschädigungen auf. Für die Beschichtung
von Betonflächen ist die porenfüllende Eigenschaft von Bedeutung. Selbst beim "Arbeiten" des Betons unter Temperaturwechselbeanspruchung bleibt die Porenfüllung aus der erfindungsgemäßen Beschichtungsmasse dank deren Elastizität und Haftung
dicht. Zusätzlich ist ein Verwitterungsschutz für Beton gegeben.

Weitere Besonderheiten, Vorteile und vorteilhafte Ausgestaltungen und Weiterbildungen der Erfindung ergeben sich aus
den Unteransprüchen.

Nachstehend wird die Erfindung im einzelnen mit Bezugnahme
auf bevorzugte Ausführungsformen erläutert.

Die erfindungsgemäße Beschichtungsmasse ist gekennzeichnet
durch einen Gehalt an den nachfolgend aufgeführten, notwendigen Bestandteilen in den angegebenen Anteilen; hierbei beziehen sich die Prozentangaben auf das Gesamtgewicht der Beschichtungsmasse:

    35 bis 60 Gew.-% Isocyanat-Präpolymer,

     8 bis 15 Gew.-% Weichmacher,

 0,3 bis  2 Gew.-% Anti-Absetzmittel,

     2 bis 10 Gew.-% blättchenförmige Extender,

     5 bis 25 Gew.-% farbgebendes Pigment,

     1 bis  3 Gew.-% feuchtigkeitsbindendes Mittel, und

   10 bis 20 Gew.-% aliphatische Ester.

Vorzugsweise enthält die Beschichtungsmasse zusätzlich 0,2 bis 1 Gew.-% übliche Lack-Zusätze. Zu solchen Lack-Zusätzen gehören - ohne darauf beschränkt zu sein - Beschleuniger, Verlaufmittel, Entlüftungsmittel, Viskositätsstabilisatoren, Netzmittel, Dispergierhilfsmittel, Antiaufschwemmittel und dgl..

Weiterhin kann die Beschichtungsmasse zusätzlich 2 bis 6 Gew.-% aromatische Kohlenwasserstoffe enthalten. Zu solchen aromatischen Kohlenwasserstoffen gehören insbesondere die verschiedenen Xylole und in geringerem Umfang Toluol. Zumeist werden die in der Lackindustrie typischerweise verwendeten Isocyanat-Präpolymere bereits im Gemisch mit derartigen aromatischen Kohlenwasserstoffen geliefert. Vorzugsweise soll die fertige Beschichtungsmasse einen möglichst geringen Anteil an solchen aromatischen Kohlenwasserstoffen aufweisen.

Als Isocyanat-Präpolymer bzw. Polyisocyanat kommen die bekannten Diisocyanate und Triisocyanate in handelsüblicher Form in Betracht. Gut geeignet ist beispielsweise die unter der Handelsbezeichnung "Desmodur" vertriebene Gruppe von Polyisocyanaten. Gute Ergebnisse wurden mit Polyisocyanaten auf Basis von Toluylendiisocyanat erzielt, wobei sowohl 2.4- wie 2.6-Toluylendiisocyanate oder das handelsübliche Isomerengemisch eingesetzt werden kann. Weiterhin kann das Polyisocyanat auf der Basis von Hexamethylen-1.6-Diisocyanat eingesetzt werden. Das in der Lackindustrie auch in großem Umfang verwendete Polyisocyanat auf der Basis von Diphenylmethan-4.4'-Diisocyanat ist weniger zweckmäßig, weil es die Lichtbeständigkeit des Schutzanstriches beeinträchtigt.

Im Rahmen der vorliegenden Erfindung ist erkannt worden, daß die für die Haftung auf flexiblen Substraten so wichtige Elastizität des ausgehärteten Anstriches neben weiteren Maßnahmen, wie Anwesenheit bestimmter Weichmacher und Auswahl geeigneter Pigmente in bestimmten Anteilen, vor allem durch die Verwendung eines Gemisches verschiedener Polyisocyanate gewährleistet werden kann. Vorzugsweise besteht deshalb das im Rahmen der vorliegenden Erfindung eingesetzte Polyisocyanat aus einem Gemisch verschiedener Polyisocyanate. Ein Gemisch verschiedener Polyisocyanate liegt vor, wenn sich die Gemischbestandteile hinsichtlich des Strukturtyps und/oder hinsichtlich ihres Gehaltes an Isocyanatgruppen unterscheiden.

Gute Ergebnisse wurden beispielsweise mit einem Gemisch aus Toluylendiisocyanat-Präpolymer und Hexamethylen-1.6-Diisocyanat-Präpolymer erhalten. Hierbei kann als Toluylendiisocyanat-Präpolymer sowohl 2.4 - wie 2.6-Toluylendiisocyanat-Präpolymer, oder es kann das in preislicher Hinsicht besonders günstige handelsübliche Isomerengemisch eingesetzt werden. Zweckmäßigerweise wird in einem Gemisch aus diesen Diisocyanat-Präpolymeren ein leichter Überschuß an Hexamethylendiisocyanat-Präpolymer eingehalten.

Im Rahmen der Erfindung ist erkannt worden, daß nicht nur die Natur des Isocyanats sondern auch dessen Isocyanat-Gruppen-Gehalt Auswirkungen auf die Elastizität des ausgehärteten Überzuges hat. Besonders gute Ergebnisse wurden mit einem Polyisocyanat erzielt, das aus einem Gemisch aus Toluylendiisocyanat-Präpolymer und Hexamethylendiisocyanat-Präpolymer bestand, wobei das Toluylendiisocyanat-Präpolymer, bezogen auf sein Gewicht, 3 bis 4 % Isocyanatgruppen, und das Hexamethylendiisocyanat-Präpolymer, bezogen auf sein Gewicht, 8 bis 10 % Isocyanatgruppen enthielt, und 100 Teile dieses Diisocyanat-Gemisches 68 bis 54 Teile Hexamethylendiisocyanat-Präpolymer enthielten, Rest Toluylendiisocyanat-Präpolymer.

Ein solches Diisocyanat-Gemisch wird im Rahmen der Erfindung besonders bevorzugt eingesetzt. Der Anteil dieses Gemisches macht vorzugsweise 38 bis 44 % des Gesamtgewichtes der Beschichtungsmasse aus.

Als weiteren notwendigen Bestandteil enthält die erfindungsgemäße Beschichtungsmasse einen oder mehrere Weichmacher. Hier kommen die in der Lackindustrie üblichen Weichmacher in Betracht. Zu brauchbaren Weichmachern gehört die Gruppe der Acrylat-Weichharze, beispielsweise ein bekanntes Mischpolymerisat aus Butylacrylat und Vinylisobutyläther. Vorzugsweise werden Weichmacher mit flammhemmender Wirkung eingesetzt. Besonders gute Ergebnisse wurden mit Phosphorsäureestern erzielt; ohne darauf beschränkt zu sein, kommen hier beispielsweise Diphenylcresolphosphat, Diphenyloctylphosphat, Tricresylphosphat und vergleichbare Phosphate in Betracht. Derartige Phosphorsäureester werden vorzugsweise als Weichmacher eingesetzt.

Anti-Absetzmittel für Beschichtungsmassen der hier betrachteten Art sind in der Fachwelt bekannt; zu bekannten und im Rahmen der vorliegenden Erfindung brauchbaren Anti-Absetzmitteln gehören beispielsweise Montmorillonite, Kieselsäure, hydriertes Rizinusöl und dgl..

Blättchenförmige Extender bzw. Füllstoffe sind ebenfalls bekannt. Zu üblichen und im Rahmen der vorliegenden Erfindung brauchbaren blättchenförmigen Extendern gehören beispielsweise Talkum, Bariumsulfat, Schuppenpigmente, insbesondere Schuppenpigmente auf der Basis von Si/Al-Oxiden und vergleichbare Füllstoffe. Die erfindungsgemäß vorgesehenen Extender sollen arm und vorzugsweise frei an Carbonat und/oder $CO_2$ abspaltenden Komponenten sein, um im Gemisch mit Polyisocyanat eine hohe Lagerstabilität zu gewährleisten.

Auch farbgebende Pigmente für Beschichtungsmassen der hier betrachteten Art sind in der Fachwelt bekannt. Diese Pigmente gewährleisten insbesondere das Licht- und Wärmereflektionsvermögen des Schutzanstriches und verleihen diesem eine bestimmte Farbe. Geeignete farbgebende Pigmente sind beispielsweise unter den Handelsbezeichnungen "Heliogenpigmente", "Paliotolpigmente", "Sikominpigmente" und dgl. handelsüblich zugänglich. Zu weiteren geeigneten Pigmenten gehören Ruß, Titandioxid, etc.

Der Anteil an farbgebendem Pigment kann von 5 bis 25 % des Gesamtgewichtes der Beschichtungsmasse reichen; vorzugsweise ist ein Pigmentgehalt von 9 bis 22 Gew.-% vorgesehen. Innerhalb dieser Bereichsgrenzen hängt der Pigmentanteil von verschiedenen Erwägungen ab. Manche Pigmente, insbesondere verschiedene Rußsorten und verschiedene Bronzen üben eine verhärtende Wirkung auf Massen der hier betrachteten Art aus. Ein hoher Anteil dieser Pigmente beeinträchtigt die Elastizität des ausgehärteten Anstriches und kann eine Versprödung des Anstriches verursachen. Der Anteil an Ruß- und Bronzepigmenten wird daher vorzugsweise im unteren Bereich innerhalb der erfindungsgemäß vorgesehenen Grenzen gehalten. Innerhalb dieser Bereichsgrenzen liefern dagegen höhere Anteile an anorganischen Buntpigmenten eine bessere Farbdeckung und höhere Farbbrillanz. Die Anwendung der in der Lackindustrie in großem Umfang verwendeten Aluminiumpigmente ist weniger zweckmäßig, weil dies die Härte des ausgehärteten Anstriches erhöhen und dessen Elastizität verringern würde.

Als feuchtigkeitsbindende bzw. feuchtigkeitsentziehende
Mittel kommen feinteilige, natürliche und synthetische Zeolithe, beispielsweise die von Bayer AG vertriebene Zeolith-L-
Paste, ferner Molekularsiebe aus Aluminium und Siliciumoxidverbindungen, die gegebenenfalls einen Titanzusatz enthalten,
in Betracht. Weiterhin können auf chemischem Wege wasserbindende Mittel vorgesehen werden, wie etwa Monoisocyanate.
Auch derartige feuchtigkeitsbindende bzw. feuchtigkeitsentziehende Mittel sind in der Fachwelt bekannt und handelsüblich
zugänglich.

Als weiteren notwendigen Bestandteil enthält die erfindungsgemäße Beschichtungsmasse 5 bis 10 Gew.-% aliphatischen Ester
oder ein Gemisch solcher Ester. Diese Ester sollen das Bindemittel strecken (reiner Löser), gewährleisten die erforderliche Verarbeitungsviskosität und greifen das teilweise Lösungsmittel-empfindliche Substrat zwar ausreichend, jedoch
nicht übermäßig an; beispielsweise wird das "Durchbluten"
von Teerpappe verhindert. Hier kommen insbesondere die Ester
der $C_1$- bis $C_3$-Carbonsäuren mit niederen ein- oder mehrwertigen aliphatischen Alkoholen in Betracht. Vorzugsweise werden
aliphatische Ester mit zwei oder mehr Estergruppen pro Molekül
eingesetzt, deren Molekulargewicht im Bereich von 120 bis 180
liegt. In dieser Hinsicht wurden besonders gute Ergebnisse mit
Glykolacetaten erhalten, welche daher vorzugsweise als aliphatische Ester verwendet werden.

Um eine feuchtigkeitshärtende 1-Komponenten-Beschichtungsmasse hoher Lagerstabilität zu erhalten, sollen die einzelnen
Bestandteile im wesentlichen frei von Komponenten mit aktiven
Wasserstoffatomen sein; in erster Linie wäre hier an Wasser-
und OH-Gruppen zu denken. Die aliphatischen Ester, der Weichmacher und die unvermeidbaren Träger für Anti-Absetzmittel
und feuchtigkeitsbindendes Mittel sollen deshalb weitestgehend wasserfrei und frei von OH-Gruppen sein.

Die Herstellung der erfindungsgemäßen Beschichtungsmasse
kann nach in der Lackindustrie üblichen Techniken erfolgen.
Zumeist werden die Komponenten in den vorgegebenen Anteilen
in einen Kessel gegeben und mittels eines Schnellrührers bzw.
Dissolvers vermischt. Ein im Rahmen der Lack-Zusätze vorgesehenes Dispergier-Hilfsmittel verhindert eine übermäßige
Schaumbildung. Es hat sich gut bewährt, das Gemisch aus Isocyanat-Präpolymer zusammen mit dem aliphatischen Ester vorzulegen, und daraufhin die restlichen Bestandteile nacheinander zuzugeben, wobei das feuchtigkeitsbindende Mittel zum
Schluß zugegeben wird. Eine Rührdauer von etwa 10 bis 20 min
bei Raumtemperatur ist ausreichend. Schließlich erhält man
eine selbstverlaufende, strukturviskose Masse, die in dieser
Form einsatzbereit ist.

Bei Bedarf kann die Beschichtungsmasse gelagert werden, wobei die Lagerfähigkeit bei Raumtemperatur wenigstens 6 Monate
beträgt. Einzelne Proben sind ohne erkennbare Viskositätszunahme und/oder Reaktivitätsabnahme bereits mehr als 12 Monate gelagert worden.

Weil die erfindungsgemäße Beschichtungsmasse ein 1-Komponenten-System darstellt, ist keine nennenswerte Topfzeit gegeben.
Das Material soll nach dem Öffnen des Lagerbehälters zügig verarbeitet werden, weil ansonsten Hautbildung und langsame Durchreaktion durch Zutritt von Luftfeuchtigkeit auftreten würde.

Die Vorbereitung des Substratuntergrundes zur erstmaligen
Aufbringung der erfindungsgemäßen Beschichtungsmasse erfordert
keine besonderen Maßnahmen; es ist ausreichend, wenn der Untergrund schmutz-, staub-, fett- und ölfrei ist. Bei Bedarf
kann leichtes Aufrauhen zweckmäßig sein. Die erfindungsgemäße
Beschichtungsmasse kann auch auf feuchter, jedoch noch nicht
nasser Fläche aufgebracht werden, ohne daß dadurch das Aushärten und Abbinden sowie die Qualität des fertigen Schutzüberzuges beeinträchtigt werden.

Die Aufbringung der Beschichtungsmasse auf dem vorgesehenen
Substrat kann nach üblichen Verfahren erfolgen, beispielsweise mit einem Pinsel oder durch Aufspritzen; gut bewährt
hat sich beispielsweise das mit hohem Druck arbeitende
Airless-Spritzverfahren.

Die Beschichtungsmasse wird in einer Schichtdicke von wenigstens 50 $\mu$m auf dem vorgesehenen Substrat aufgebracht; im
Einzelfall kann die Schichtdicke vom Substratmaterial und/
oder dem Verwendungszweck abhängen. Auf glattem oder geprägtem Kunstleder, beispielsweise für Schuhe, Einbanddecken
und Mappen kommen Schichtdicken in der Größenordnung von
etwa 50 bis 100 $\mu$m in Betracht. Für typische Kunststofffolien aus Polyester oder Vinylkunststoffen reichen geringere Schichtstärken in der Größenordnung von etwa 20 bis 60 $\mu$m
aus. Obwohl die erfindungsgemäße Beschichtungsmasse in mehreren Arbeitsgängen auftragbar ist, werden vorzugsweise Anstriche bis zu einer Schichtdicke von ca. 2 mm lediglich in
einem einzigen Arbeitsgang aufgebracht. Unter üblichen Bedingungen trocknet beispielsweise eine 80 $\mu$m dicke Schicht
nach etwa 2 bis 3 h aus und ist nach ca. 15 bis 20 h völlig
ausgehärtet und kann der vorgesehenen Belastung ausgesetzt
werden. Nach Bewitterung und/oder Alterung, auch über einen
Zeitraum von 1 Jahr und länger hinweg, ist der aus der erfindungsgemäßen Beschichtungsmasse erhaltene Anstrichfilm ohne
weiteres mit dem gleichen Material erneut beschichtbar.

Nach dem Auftragen der Beschichtungsmasse auf dem Untergrund
härtet diese allein unter Zutritt der Feuchtigkeit aus der umgebenden Atmosphäre selbsttätig aus, ohne daß besondere Maßnahmen erforderlich wären.

Wie bereits ausgeführt, liefert die erfindungsgemäße Beschichtungsmasse einen farbigen Anstrich hoher Deckkraft mit besonders hoher Elastizität. Deshalb eignet sich die erfindungsgemäße Beschichtungsmasse besonders gut zur Beschichtung von flexiblen Substraten, die mit einem farbigen Deckanstrich versehen werden sollen. Daneben kommt die erfindungsgemäße Beschichtungsmasse zum Witterungsschutz, auch als Deckanstrich auf Korrosionsschutzüberzügen gegenüber Meerwasser und aggressiven Chemikalien in Betracht. In dieser Hinsicht kann die Beschichtungsmasse zur Erzeugung eines farbigen Deckanstriches auf Aluminiumprofilen und Chromteilen, beispielsweise an Fensterrahmen, an Schiffsaufbauten und dgl. vorgesehen werden. Wegen der hohen Abriebbeständigkeit kommen hier auch mechanisch stark belastete Flächen in Betracht. In der Regel wird bei der Beschichtung von Metall eine Schichtdicke in der Größenordnung von 50 bis 200 µm vorgesehen.

Eine weitere Anwendungsmöglichkeit betrifft die Beschichtung von Hart- und Weichschäumen, beispielsweise aus PUR-Materialien, wie sie häufig zu Isolierzwecken eingesetzt werden. Hier werden zumeist Schichtdicken von etwa 50 bis 100 µm vorgesehen. Entsprechend beschichtete PUR-Hart- oder Weichschäume wurden beispielsweise als Isoliermaterialien in Taucherglocken eingesetzt.

Weiterhin können die erfindungsgemäßen Beschichtungsmassen zur Abdichtung und/oder Renovierung von mit Dachpappe eingedeckten Dächern verwendet werden. In diesem Falle kann die Beschichtungsmasse in einer Menge von 200 bis 400 g/m$^2$ aufgebracht werden. Soweit die Schichtdicken 2 mm deutlich übersteigen, wird vorzugsweise ein zweimaliger Auftrag vorgesehen.

Weiterhin wurden die erfindungsgemäßen Beschichtungsmassen zur Beschichtung von Planen verwendet, wie sie typischerweise zur Abdeckung von LKW-Aufbauten verwendet werden; auch auf einem solchen, notorisch stark beanspruchten flexiblen Substrat haftete der Anstrichfilm ausgezeichnet und zeigte auch nach monatelangem Gebrauch keinerlei Rißbildung und Abscheuern
des farbigen Deckanstriches.

Eine weitere Anwendungsmöglichkeit betrifft die Beschichtung
von Betonflächen. Schichtstärken von 100 bis 300 $\mu$m liefern
über viele Jahre hinweg witterungsbeständige, porendichtende
Anstriche mit ausreichender Wasserdampfdurchlässigkeit.

Beschichtungsmasse für flexible Substrate,
deren Verwendung, und
Verfahren zur Erzeugung eines Schutzüberzuges

Patentansprüche:

1. Feuchtigkeitshärtende 1-Komponenten-Beschichtungsmasse
   für flexible Substrate,
   gekennzeichnet durch einen Gehalt an

   35 bis 60 Gew.-% Isocyanat-Präpolymer,
   8 bis 15 Gew.-% Weichmacher,
   0,3 bis 2 Gew.-% Anti-Absetzmittel,
   2 bis 10 Gew.-% blättchenförmige Extender,
   5 bis 25 Gew.-% farbgebendes Pigment,
   1 bis 3 Gew.-% feuchtigkeitsbindendes Mittel, und
   10 bis 20 Gew.-% aliphatische Ester.

2. 1-Komponenten-Beschichtungsmasse nach Anspruch 1,
   dadurch gekennzeichnet, daß
   die Beschichtungsmasse 38 bis 44 Gew.-% Isocyanat-Präpolymer
   enthält.

3. 1-Komponenten-Beschichtungsmasse nach Anspruch 1 oder 2,
   dadurch gekennzeichnet, daß
   die Beschichtungsmasse 9 bis 22 Gew.-% farbgebendes Pigment
   · enthält.

4. 1-Komponenten-Beschichtungsmasse nach einem der Ansprüche
   1 bis 3,
   dadurch gekennzeichnet, daß
   die Beschichtungsmasse zusätzlich 0,2 bis 1 Gew.-% Lack-
   Zusätze enthält.

5. 1-Komponenten-Beschichtungsmasse nach einem der Ansprüche
   1 bis 4,
   dadurch gekennzeichnet, daß
   die Beschichtungsmasse zusätzlich 2 bis 6 Gew.-% aromatische
   Kohlenwasserstoffe enthält.

6. 1-Komponenten-Beschichtungsmasse nach einem der Ansprüche
   1 bis 5,
   dadurch gekennzeichnet, daß
   das Isocyanat-Präpolymer ein Gemisch verschiedener Polyisocyanate ist.

7. 1-Komponenten-Beschichtungsmasse nach einem der Ansprüche
   1 bis 6,
   dadurch gekennzeichnet, daß

0200801

das Isocyanat-Präpolymer ein Gemisch von Polyisocyanaten
auf der Basis von Hexamethylendiisocyanat und Toluylendiisocyanat ist.


8. 1-Komponenten-Beschichtungsmasse nach Anspruch 7,
   dadurch gekennzeichnet, daß
   100 Teile Gemisch 54 bis 68 Teile Hexamethylendiisocyanat-
   Präpolymer und 32 bis 46 Teile Toluylendiisocyanat-Präpolymer
   enthalten.


9. 1-Komponenten-Beschichtungsmasse nach Anspruch 7 oder 8,
   dadurch gekennzeichnet, daß
   das Hexamethylendiisocyanat-Präpolymer - bezogen auf das
   Isocyanatgewicht - 8 bis 10 % Isocyanatgruppen enthält.


10. 1-Komponenten-Beschichtungsmasse nach Anspruch 7 oder 8,
    dadurch gekennzeichnet, daß
    das Toluylendiisocyanat-Präpolymer - bezogen auf das Isocyanatgewicht - 3 bis 4 % Isocyanatgruppen enthält.


11. 1-Komponenten-Beschichtungsmasse nach einem der Ansprüche
    1 bis 10,
    dadurch gekennzeichnet, daß
    der Weichmacher ein Phosphorsäureester ist.


12. 1-Komponenten-Beschichtungsmasse nach einem der Ansprüche
    1 bis 11,
    dadurch gekennzeichnet, daß
    der aliphatische Ester zwei oder mehr Estergruppen pro Molekül enthält und ein Molekulargewicht im Bereich von 120 bis
    180 aufweist.

13. 1-Komponenten-Beschichtungsmasse nach einem der Ansprüche
    1 bis 12,

    dadurch gekennzeichnet, daß

    der aliphatische Ester ein Glykolacetat ist.

14. 1-Komponenten-Beschichtungsmasse nach einem der Ansprüche
    1 bis 13,

    dadurch gekennzeichnet, daß

    der nach Aushärten der Beschichtungsmasse erhaltene Film hoch
    elastisch ist, insbesondere wenigstens eine solche Elastizität
    aufweist, daß eine auf einer Metallfolie haftende, 50 μm dicke
    Anstrichfolie nicht reißt oder sich ablöst, wenn die Metallfolie entsprechend dem Dornbiegeversuch nach DIN 53 152 um
    einen 1 mm starken Dorn gebogen wird.

15. Verfahren zur Erzeugung eines farbigen, hochelastischen Schutz-
    überzugs auf einem flexiblen Substrat,
    dadurch gekennzeichnet, daß
    man eine feuchtigkeitshärtende 1-Komponenten-Beschichtungsmasse nach einem der Ansprüche 1 bis 14 auf dem Substrat aufbringt und unter Feuchtigkeitszutritt aus der umgebenden Atmosphäre aushärten läßt.

16. Verfahren nach Anspruch 15,
    dadurch gekennzeichnet, daß
    man die Beschichtungsmasse in einer Schichtdicke von wenig-
    stens 50 μm aufbringt.

17. Verwendung einer feuchtigkeitshärtenden 1-Komponenten-Beschichtungsmasse nach einem der Ansprüche 1 bis 14 zur Erzeugung eines farbigen, lichtbeständigen, gut haftenden
    und hoch elastischen Anstriches auf einem flexiblen Substrat.

18. Verwendung nach Anspruch 17,
    wobei man die Beschichtungsmasse auf Metallteilen wie Aluminiumprofilen, Stahlflächen und dgl. in einer Schichtdicke von 50 bis 200 μm aufbringt.

19. Verwendung nach Anspruch 17,
    wobei man die Beschichtungsmasse auf Kunststoffolien in einer Schichtdicke von 50 bis 100 μm aufbringt.

20. Verwendung nach Anspruch 17,
    wobei man die Beschichtungsmasse auf der Oberfläche von PUR-Hart- oder Weichschäumen in einer Schichtdicke von 50 bis 100 μm aufbringt.

21. Verwendung nach Anspruch 17,
    wobei man die Beschichtungsmasse auf Betonflächen in einer Schichtstärke von 100 bis 300 μm aufbringt.

22. Verwendung nach Anspruch 17,
    wobei man zur Abdichtung und/oder zur Renovierung von mit Dachpappe eingedeckten Dächern die Beschichtungsmasse in einer Menge von 200 bis 400 g/m$^2$ aufbringt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 103 309 (BGB-GESELLSCHAFT)  * Ansprüche 1,2,5,11,17-22; Seite 7, Zeilen 14-25; Seite 10, Zeilen 1-11 *  --- | 1,6,11 ,12,15 -22 | C 09 D 3/72<br>C 09 D 3/49<br>C 08 G 18/10<br>C 08 G 18/08<br>C 08 G 18/72<br>C 08 K 13/02<br>C 08 K 13/04<br>C 08 K 5/52<br>B 05 D 7/16<br>C 08 J 7/04 |
| Y | DE-A-2 640 047 (SEGARD NORBERT)  * Ansprüche 1,6,7; Seite 9, Absäzte 2,3; Seite 24, Absatz 1 *  --- | 1,6,11 ,12,15 -22 | |
| Y | US-A-3 919 173 (N.R. COYNER et al.)  * Anspruch 1; Spalte 7, Zeilen 11-44; Spalte 8, Zeilen 39-53; Beispiel 1 *  --- | 1,6,11 ,12,15 -22 | |
| A | DE-A-2 848 720 (MEYER OLGA et al.)  * Ansprüche 1,6; Seite 5, Absatz 2 *  --- | 1,5,12 ,13 | **RECHERCHIERTE SACHGEBIETE (Int. Cl.4)**<br><br>C 08 G<br>C 09 D<br>C 08 L<br>C 08 K |
| A | US-A-4 436 784 (W.A. EHRHART)  * Anspruch 1; Spalte 2, Zeilen 27-52 *  ---   -/- | 1,11 | |

Der vorliegende Recherchenbericht wurde für alle Patentansprüche erstellt.

| Recherchenort | Abschlußdatum der Recherche | Prüfer |
|---|---|---|
| DEN HAAG | 08-01-1986 | VAN PUYMBROECK M.A. |

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 512 327  (BAYER)<br>* Zusammenfassung, Punkt I; Seite 4, rechte Spalte, Absätze 2,3; Beispiel 11 * | 1 | |
| | ----- | | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 08-01-1986 | VAN PUYMBROECK M.A. |

EPA Form 1503 03 82